# EUROPEAN PATENT APPLICATION

(11) **EP 4 438 556 A1**
(43) Date of publication of application: **02.10.2024**
(21) Application number: 22898482.9
(22) Date of filing: 16.11.2022
(51) Int. Cl.: C01B 32/28, B32B 9/00

(54) **STRUCTURE COMPRISING DIAMOND COATING FILM, AND METHOD FOR MANUFACTURING SAME**

(30) Priority: 24.11.2021 JP 2021189938
(71) Applicant: Daicel Corporation, Osaka-shi, Osaka 530-0011 (JP)
(72) Inventor: YOSHIKAWA, Taro, Tokyo 108-8230 (JP)
(74) Representative: Grünecker Patent- und Rechtsanwälte PartG mbB
(86) International application number: PCT/JP2022/042572
(87) International publication number: WO 2023/095698

(57) **Abstract**

Provided is a structure (7) provided with a diamond coating film (6) excelling in surface smoothness, and a method for producing the same. The present disclosure relates to a structure (7) including: a substrate (1); and a coating film (6) including a first layer (2) of diamond particles fixed on a surface of the substrate (1), and one or more other layers (3...) of diamond particles disposed on the first layer (2) of diamond particles, the first and other layers (2,3, ...) of diamond particles adjacent to each other in a height direction being in close contact with each other. Preferably, in the structure (7), the first and other layers of diamond particles adjacent to each other in the height direction are in close contact with each other by Coulomb force.

## Description

### Technical Field

The present disclosure relates to a structure provided with a diamond coating film, and a method for producing the same. The present disclosure claims priority to JP 2021-189938 filed on November 24, 2021 in Japan, the entire contents of which are incorporated herein by reference.

### Background Art

Patent Documents 1 and 2 describe that a paste containing diamond particles and a thickener or a binder is applied onto a substrate and dried to produce a coating film containing diamond particles. In the production method, when the amount of the paste increases, a coating film having a large thickness can be obtained, but the smoothness of the surface deteriorates. On the other hand, when the amount of the paste decreases, a coating film having a smooth surface can be formed, but it is difficult to increase the thickness of the coating film. That is, it has been difficult to simultaneously achieve thickness increase and surface smoothing of a coating film containing diamond particles.

### Citation List

### Patent Document

Patent Document 1: JP 2009-91234 A
Patent Document 2: JP 2013-254041 A

### Summary of Invention

### Technical Problem

Therefore, an object of the present disclosure is to provide a structure provided with a diamond coating film excelling in surface smoothness.

Another object of the present disclosure is to provide a method for producing a diamond coating film excelling in surface smoothness.

### Solution to Problem

As a result of intensive studies to solve the above-mentioned problems, the present inventors have found that, by adsorption of diamond particles having a positive charge and diamond particles having a negative charge alternately on a substrate having a positive or negative charge via Coulomb force (namely, electrostatic force), the diamond particles can be fixed and stacked on the substrate without using a paste, and a diamond coating film having a desired thickness can be formed by adjusting the number of stacking, and since it is not necessary to use a paste, the surface smoothness can be favorably maintained even though the film thickness is increased. The present disclosure has been completed based on these findings.

Specifically, the present disclosure provides a structure including:
a substrate; and
a coating film including a first layer of diamond particles fixed on a surface of the substrate, and one or more other layers of diamond particles disposed on the first layer of diamond particles, the first and other layers of diamond particles adjacent to each other in a height direction being in close contact with each other.

The present disclosure also provides the structure wherein the first and other layers of diamond particles adjacent to each other in the height direction are in close contact with each other by Coulomb force.

The present disclosure also provides a method for producing a structure. The method includes: performing the following Step 1; and then performing the following Step 2 at least once to produce the structure:
Step 1: fixing, on a substrate having a positive or negative charge, a layer of diamond particles having a negative or positive charge that is opposite to the charge of the substrate; and
Step 2: stacking, on the previously fixed or stacked layer of diamond particles, another layer of diamond particles having a positive or negative charge that is opposite to the charge of the diamond particles in the previously fixed or stacked layer.

The present disclosure also provides the method for producing a structure, wherein the diamond particles having a positive or negative charge for each layer have an absolute value of a zeta potential in water of 20 mV or more.

### Advantageous Effects of Invention

According to the method for producing a structure of the present disclosure, it is possible to easily form a nanodiamond coating film having a desired thickness on a surface of a substrate by stacking diamond particles utilizing Coulomb force and van der Waals force.

The structure thus formed has a nanodiamond coating film having excellent surface smoothness. The coating film exhibits a metal color with a color tone that varies depending on the number of the layers of diamond particles. This is because a color tone change due to optical interference occurs according to a difference in the number of the stacked layers. Therefore, according to the method for producing a structure, a structure having a metal color of a desired color tone and excelling in decorating ability can be obtained.

Furthermore, the structure can also be used as a substrate with a seed crystal in the formation of a diamond growth layer by, for example, the CVD process.

### Brief Description of Drawings

FIG. 1 is a graph illustrating the relationship between the pH and the zeta potential of diamond particles in an aqueous suspension containing diamond particles having a positive zeta potential and an aqueous suspension containing diamond particles having a negative zeta potential used in Examples.

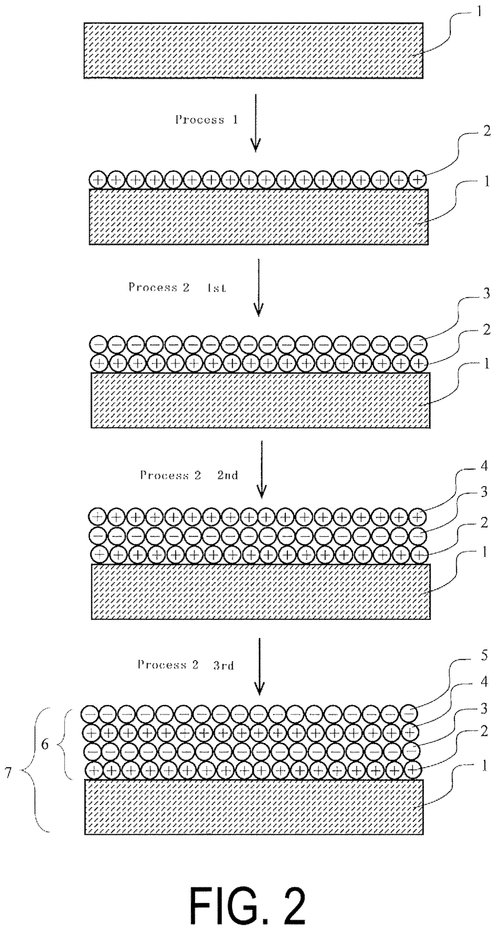

FIG. 2 is a schematic view illustrating an example of the method for producing a structure of the present disclosure (an example in which four diamond particle layers are stacked on a substrate having a negative charge).

### Description of Embodiments

### Structure

The structure according to the present disclosure includes a substrate; and a coating film. The coating film includes a first layer of diamond particles fixed on a surface of the substrate, and one or more other layers of diamond particles stacked on the first layer of diamond particles. The first and other layers of diamond particles adjacent to each other in a height direction are in close contact with each other.

The structure preferably includes a substrate and a coating film composed of two or more diamond particle layers covering the surface of the substrate.

The structure may have an additional configuration besides the substrate and the coating film.

The diamond particles may be, for example, heteroatom-doped diamond particles such as nitrogen-doped diamond particles or boron-doped diamond particles. Two or more types of diamond particles may be used in combination.

Examples of the substrate include a silicon substrate, a copper substrate, a silver substrate, a gold substrate, an iridium substrate, a glass substrate, a quartz substrate, a gallium arsenide substrate, an aluminum nitride substrate, a gallium nitride substrate, a graphite substrate, a diamond-like carbon substrate, a diamond substrate, a sapphire substrate, and a stainless steel substrate.

The coating film includes a laminate of a first layer of diamond particles fixed on the substrate and a second layer (and subsequent layers) of diamond particles disposed on the first layer of diamond particles.

The thickness of the coating film is, for example, from 5 nm to 10 µm, and can be appropriately selected according to the intended use. In the case of use for decoration, the thickness of the coating film is, for example, from 5 to 300 nm, and preferably from 20 to 150 nm.

The coating film has excellent surface smoothness and a root mean square roughness (Rms) of, for example, 200 nm or less, preferably 100 nm or less, and particularly preferably 50 nm or less. The lower limit of the root mean square roughness (Rms) is, for example, 2 nm.

The diamond particles of the first layer fixed on the substrate may be arranged in two-dimensional directions on the surface of the substrate. As the method for the arrangement, the diamond particles may be arranged regularly or may be arranged at random.

The diamond particles of the first layer are preferably fixed on the substrate by Coulomb force and van der Waals force. It is preferable that the diamond particles belonging to the adjacent layers on or over the first layer (that is, the diamond particles adjacent to each other in the height direction) are also in close contact to each other by the Coulomb force and the van der Waals force.

The structure includes a coating film that exhibits a metal color with a color tone that varies depending on the number of the diamond particle layers. Therefore, the structure is excellent in decorating ability.

### Method for Producing Structure

The structure can be produced by, for example, a method including performing the following Step 1 once, and then performing the following Step 2 at least once (Method 1).

Step 1: fixing, on a substrate having a positive or negative charge, a layer of diamond particles having a positive or negative charge that is opposite to the charge of the substrate; and
Step 2: stacking, on the previously fixed or stacked layer of diamond particles, another layer of diamond particles having a positive or negative charge that is opposite to the charge of the diamond particles in the previously fixed or stacked layer.

### Step 1

Step 1 is a process of fixing, on the substrate, a layer of diamond particles having a charge opposite to the charge of the substrate.

When the substrate has a positive charge, diamond particles having a negative charge are fixed, whereas when the substrate has a negative charge, diamond particles having a positive charge are fixed.

The substrate has a positive or negative charge. The substrate may be made of a material having a positive or negative charge, or may be a substrate made of a material having no charge, but whose surface has been subjected typically to a chemical treatment to thereby be electrostatically charged. Alternatively, the substrate may be made of a material having a positive or negative charge and whose surface has been subjected typically to a chemical treatment to thereby be more strongly charged.

Examples of the substrate having a negative charge include a silicon substrate, a copper substrate, a glass substrate, and a quartz substrate.

Examples of the substrate having a positive charge include an aluminum nitride substrate.

The shape of the substrate is not particularly limited, and a substrate having a desired shape can be used.

The method for fixing, onto the substrate, a layer of diamond particles having a charge opposite to the charge of the substrate is not particularly limited, and examples thereof include a method including applying an aqueous dispersion containing diamond particles having a charge opposite to the charge of the substrate onto the substrate, and drying the aqueous dispersion. When an aqueous dispersion containing diamond particles having a charge opposite to the charge of the substrate is applied onto the substrate, the diamond particles in the aqueous dispersion migrate toward the substrate by Coulomb force. When the diamond particles approach the substrate, van der Waals force acts in addition to the Coulomb force, and the diamond particles are adsorbed and fixed onto the substrate.

The shape of the diamond particles is not particularly limited, and examples thereof include a spherical shape (e.g., a true spherical shape, a substantially true spherical shape, an elliptically spherical shape), a polyhedral shape, a rod shape (e.g., a cylindrical shape, a prismatic shape), a planar plate shape, a flaky shape, and an irregular shape.

The size of the diamond particles is not particularly limited, and can be appropriately selected depending on the intended use. In the case of use for decoration, the average particle size (d50) of the diamond particles is, for example, 3 nm to 100 µm. By using the diamond particles having an average particle diameter in the above-mentioned range, a coating film having excellent surface smoothness can be formed. The particle size (d50) is the particle size of the diamond particles in an aqueous dispersion, and can be measured by dynamic light scattering.

Diamond particles having a positive charge have mainly hydrogen atoms as surface functional groups. Diamond particles having a negative charge mainly have oxygen-containing groups as surface functional groups (for example, an oxo group, a carboxyl group, a hydroxyl group, a ketone group, and an ether bond).

Diamond particles having a positive charge have a positive zeta potential in an aqueous dispersion, and diamond particles having a negative charge have a negative zeta potential in an aqueous dispersion.

The aqueous dispersion containing diamond particles contains at least diamond particles and water.

The content of the diamond particles in the aqueous dispersion is, for example, from 0.001 to 5.0 wt%, and preferably from 0.1 to 1.0 wt%. The proportion of the diamond particles in the total amount of the solid content in the aqueous dispersion is, for example, 50 wt% or greater, preferably 70 wt% or greater, more preferably 80 wt% or greater, particularly preferably 90 wt% or greater, most preferably 95 wt% or greater, and especially preferably 99 wt% or greater.

The aqueous dispersion may contain one or more other components in addition to the diamond particles and water. Examples of other components include a thickener, a dispersant, and a buffer. The content of other components is, for example, 50 wt% or less, preferably 30 wt% or less, more preferably 20 wt% or less, particularly preferably 10 wt% or less, most preferably 5 wt% or less, and especially preferably 1 wt% or less of the total amount of the solid content contained in the aqueous dispersion.

In the method of the present disclosure, since the diamond particles are stacked (or laminated) utilizing Coulomb force and van der Waals force, the aqueous dispersion may have a low viscosity, and the viscosity (mPa·s) at 25°C and a rotation speed D of 20/s is, for example, 100 mPa·s or less, and preferably 10 mPa·s or less. The lower limit of the viscosity is, for example, 0.1 mPa·s. Note that the viscosity can be measured typically using a rheometer (trade name "PHYSICA USD200", available from Anton Paar Physica).

It is preferable that the substrate and the diamond particles fixed on the substrate have charges opposite to each other and have a larger amplitude of (or difference in) the zeta potential, since the Coulomb force and van der Waals force generated between the substrate and the diamond particles become greater and this increases the adhesiveness, so that the diamond particles can be firmly fixed on the surface of the substrate.

The absolute value of the zeta potential of the diamond particles in the aqueous dispersion is, for example, 20 mV or more, preferably 30 mV or more, and particularly preferably 35 mV or more.

The absolute value of the zeta potential can be controlled by adjusting the pH of the aqueous dispersion containing the diamond particles. Examples of such pH adjusting agents include acids such as acetic acid, boric acid, citric acid, oxalic acid, phosphoric acid, and hydrochloric acid; and alkalis such as ammonia, sodium hydroxide, and potassium hydroxide.

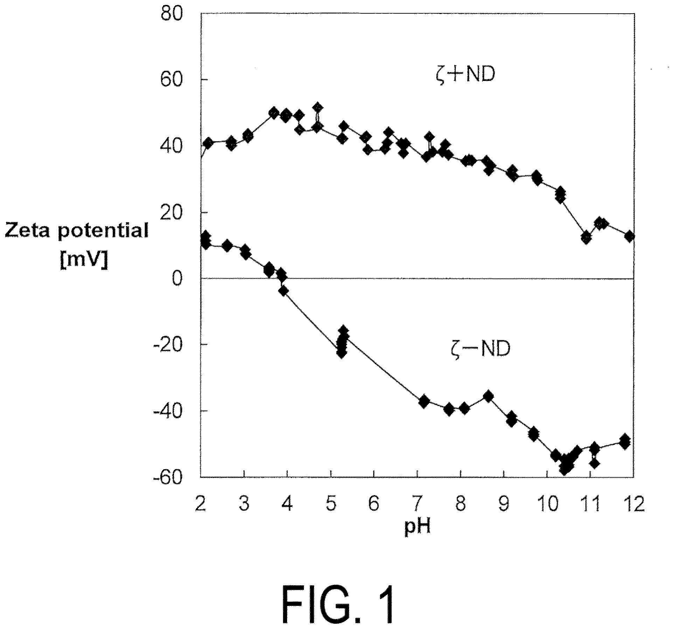

For example, the diamond particles having a positive zeta potential used in Examples have a maximal absolute value of zeta potential at a pH of around 3 to 4, and the diamond particles having a negative zeta potential used in Examples have a maximal absolute value of zeta potential at a pH of around 10 to 11 (see FIG. 1).

The method for applying the aqueous dispersion onto the substrate is not particularly limited, and the application can be performed by, for example, a printing process, a coating process, or a dipping process.

The aqueous dispersion may be applied only once or may be applied repeatedly plural times.

After the aqueous dispersion is applied onto the substrate, the diamond particles can be fixed on the substrate by volatilizing water through drying. Consequently, a laminate including the substrate and the diamond particles fixed on the surface of the substrate can be obtained, in which the diamond particles form a first diamond particle layer covering the surface of the sub strate.

### Step 2

Step 2 is a process of stacking diamond particles having a positive or negative charge that is opposite to the charge of the diamond particles in the fixed first layer, on the first layer of diamond particles fixed in Step 1, or on the previously stacked diamond particle layer (outermost layer).

When the fixed diamond particles in the first layer have a positive charge, diamond particles having a negative charge are stacked, whereas when the fixed diamond particles in the first layer have a negative charge, diamond particles having a positive charge are stacked.

The method for stacking diamond particles having a charge opposite to the charge of the diamond particles in the previously fixed or stacked layer on the previously fixed or stacked layer of diamond particles is not particularly limited, and examples thereof include a method including applying an aqueous dispersion containing diamond particles having a charge opposite to the charge of the diamond particles in the previously fixed or stacked layer onto the previously fixed or stacked layer of diamond particles, and drying the aqueous dispersion. When an aqueous dispersion containing diamond particles having an opposite charge is applied onto the previously fixed or stacked layer of diamond particles, the diamond particles in the aqueous dispersion migrate toward the previously fixed or stacked diamond particles due to Coulomb force, and when they approach each other, they are adsorbed and fixed on each other by the action of van der Waals force in addition to the Coulomb force.

As the aqueous dispersion containing diamond particles, an aqueous solution similar to the aqueous dispersion containing diamond particles used in Step 1 except that diamond particles having an opposite charge are contained can be used.

It is preferable that the zeta potential of the diamond particles in the previously fixed or stacked layer and the zeta potential of the diamond particles having a charge opposite to the charge of the former diamond particles have a large amplitude (or difference) because a large Coulomb force and a large van der Waals force develop, whereby the diamond particle layer can be uniformly and densely stacked.

The amplitude (or difference) is represented by the sum of the absolute value of the zeta potential of the diamond particles in the previously fixed or stacked layer and the absolute value of the zeta potential of the diamond particles having a charge opposite to the charge of the former diamond particles, and is, for example, 40 mV or more, preferably 50 mV or more, more preferably 60 mV or more, particularly preferably 65 mV or more, most preferably 70 mV or more, and especially preferably 80 mV or more. The upper limit of the sum of the absolute values of the zeta potentials is, for example, 120 mV.

The method for applying the aqueous dispersion onto the substrate is not particularly limited, and the application can be performed by, for example, a printing process, a coating process, or a dipping process.

The aqueous dispersion may be applied only once or may be applied repeatedly plural times.

After the aqueous dispersion is applied onto the previously fixed or stacked layer of diamond particles, the diamond particles can be fixed or attached onto the previously fixed or stacked layer of diamond particles by volatilizing moisture through drying. In this way, a structure having a laminated structure of substrate/first diamond particle layer/second diamond particle layer can be formed.

It is sufficient to perform Step 2 at least once, and the number of times of Step 2 can be adjusted according to the intended use. In the case of use for decoration, the number of times is, for example, from 2 to 50 times, and preferably from 5 to 30 times.

When Step 2 is performed repeatedly 2 or more times, the charge of the diamond particles to be stacked is alternately changed to positive/negative/positive/negative.... According to the method, the diamond particle layers can be stacked in the height direction by utilizing Coulomb force, and a coating film having three or more diamond particle layers can be formed.

Through Step 2, a structure including a substrate, and a coating film composed of two or more diamond particle layers covering the surface of the substrate can be obtained.

The structure can also be produced by a method including performing the following Step 1' once, and then repeatedly performing the following Steps 2' and 3' (Method 2).

Step 1': fixing diamond particles having a positive charge on a substrate having a negative charge;

Step 2': subjecting the fixed diamond particles having a positive charge to a high-temperature annealing treatment and/or a corona discharge treatment in the atmosphere to invert the charge of the diamond particles to a negative charge; and

Step 3': fixing diamond particles having a positive charge on the diamond particles whose charge is inverted to a negative charge.

As a method for producing the structure, the above-mentioned Method 1 is preferable to form a coating film having more excellent surface smoothness.

The diamond particles having a positive charge used in Method 1 or Method 2 can be produced, for example, through the following steps of Formation, Acid treatment, Oxidation treatment, Drying, and Hydrogenation.

### Formation

First, an explosive is placed in a pressure-resistant container for detonation, the container is sealed in a state where the explosive coexists with a gas having an atmospheric composition, and the explosive is detonated in the container. As the explosive, for example, a mixture of TNT and RDX can be used.

During the detonation, carbon released due to partial incomplete combustion of the used explosive is used as a raw material, and a crude product of diamond particles (including an aggregate of diamond particles, soot, and oxides of metals such as Fe, Co, and Ni derived from the container) is obtained by the action of the pressure and energy of the shock wave generated by the explosion.

### Acid Treatment

The acid treatment is a process of allowing, for example, a strong acid to act on the crude product of diamond particles in an aqueous solvent to remove metal oxides. Examples of the strong acid include hydrochloric acid, hydrofluoric acid, sulfuric acid, nitric acid, and mixtures thereof. The acid treatment temperature is, for example, from 70°C to 150°C. The duration of the acid treatment is, for example, from 0.1 to 24 hours. After the acid treatment, the solid content is preferably washed with water through decantation until the pH of the precipitation-containing liquid reaches, for example, 2 to 3.

### Oxidation Treatment

The oxidation treatment is implemented to remove graphite from the crude product of diamond particles, using an oxidizing agent. As the oxidizing agent, for example, a mixed acid can be suitably used, of which a mixture with a weight ratio of sulfuric acid/nitric acid of typically from 60/40 to 95/5 is particularly preferred.

The amount of the oxidizing agent (particularly, the mixed acid described above) is, for example, from 20 to 40 parts by weight, per 1 part by weight of the crude product of diamond particles.

When the mixed acid is used as the oxidizing agent, a catalyst may be used together with the mixed acid. The use of such a catalyst can further enhance the efficiency of graphite removal. Examples of the catalyst include copper (II) carbonate. The amount of the catalyst is, for example, from about 0.01 to about 10 parts by weight per 100 parts by weight of the crude product of diamond particles.

The temperature for the oxidation treatment is, for example, from 100 °C to 200°C. The duration of the oxidation treatment is, for example, from 1 to 24 hours.

### Drying

Drying is a process of evaporating the liquid from the diamond particle-containing solution or dispersion obtained through the above-mentioned steps, and an apparatus such as a spray drying apparatus, an evaporator, or a drying oven can be used. Through the drying, powdery diamond particles are obtained.

### Oxygen Oxidation

The oxygen oxidation is a process of heating powdery diamond particles in an oxygen-containing gas atmosphere. The temperature for the oxygen oxidation treatment is, for example, from 250°C to 500°C. The oxygen-containing gas is a mixed gas containing an inert gas in addition to oxygen. The oxygen concentration in the mixed gas is, for example, from 1 to 35 vol.%.

### Hydrogenation

Hydrogenation is a process of heating powdery diamond particles in a hydrogen-containing gas atmosphere. The temperature for the hydrogenation treatment is, for example, from 400°C to 800°C. The hydrogen-containing gas is a mixed gas containing an inert gas in addition to hydrogen. The hydrogen concentration in the mixed gas is, for example, from 1 to 50 vol.%. Through the hydrogenation, diamond particles having mainly hydrogen atoms as surface functional groups can be obtained. When the obtained diamond particles are in the form of aggregates (secondary particles), it is preferable to perform a crushing treatment or a classification treatment.

The diamond particles having a negative charge used in Method 1 can be produced, for example, through the steps of Formation, Acid treatment, Oxidation treatment, Drying, and Oxygen oxidation.

Formation, Acid treatment, Oxidation treatment, and Drying can be performed by the same methods as those for the above-mentioned method for producing diamond particles having a positive charge.

Oxygen oxidation can be performed by the same method as that for the above-mentioned Oxygen oxidation of the diamond particles having a positive charge, except that the temperature for the oxygen oxidation treatment is set to be relatively high (for example, from 400°C to 450°C). Through the oxygen oxidation, diamond particles having mainly oxo groups as surface functional groups can be obtained. When the obtained diamond particles are in the form of aggregates (secondary particles), it is preferable to perform a crushing treatment or a classification treatment.

Each of the configurations, their combinations, and the like of the present disclosure above is an example, and addition, omission, substitution, and change of the configuration can be appropriately made without departing from the gist of the present disclosure. In addition, the present disclosure is not limited by the embodiments and is limited only by the claims.

### Examples

Hereinafter, the present disclosure will be described more specifically with reference to examples, but the present disclosure is not limited by these examples.

A "ζ + nanodiamond aqueous dispersion" of DINNOVARE available from Daicel Corporation (d50 of diamond particles: 3.5 nm, concentration of diamond particles: 1 wt%, pH: 5, zeta potential: +50 mV, viscosity at 25°C and rotation speed D of 20/s: less than 100 mPa·s) was used as an aqueous dispersion of nanodiamond (ND) particles having a positive zeta potential.

A "ζ - nanodiamond aqueous dispersion" of DINNOVARE available from Daicel Corporation (d50 of diamond particles: 3.5 nm, concentration of diamond particles: 1 wt%, pH: 9, zeta potential: -40 mV, viscosity at 25°C and rotation speed D of 20/s: less than 100 mPa·s) was used as an aqueous dispersion of ND particles having a negative zeta potential.

### Preparation Example 1

A commercially available semiconductor Si wafer (4-inch in diameter, Si(100), p-type, one surface polished) was cut into a square of 1.0 cm to 1.5 cm × 1.0 cm to 1.5 cm with a wafer cutter (diamond scriber).

A 500-mL beaker was prepared, 200 mL of deionized water (pure water) was poured in the beaker, and 100 mL of 12% aqueous ammonia was added thereto. The beaker was then heated to about 96°C in an oil bath.

Thereafter, the temperature of the oil bath was reset to 80°C, and 40 mL of a 30% aqueous hydrogen peroxide solution was added. An RCA (SC-1) cleaning liquid having a temperature of from 75°C to 80°C was thus obtained. The cut Si substrate was quickly put into this cleaning liquid, a watch glass was put thereon, and the temperature of the oil bath was maintained at 75°C to 80°C for 30 minutes. In this way, from the surface of the Si substrate, organic substances were dissolved and removed, and insoluble particles were peeled off and removed.

After 30 minutes, the power supply to the oil bath was turned off, and the cleaning liquid was allowed to cool to 30°C or lower. After cooling, while being not taken out and carefully prevented from contacting with air, the Si substrate was sufficiently washed by replacing the cleaning liquid with fresh pure water (deionized water) 4 to 5 times. After cleaning, the polished surface of the Si substrate was dried by air blowing, and stored in a sealed container to avoid adhesion of dust in the air.

### Example 1

10 mL of a ζ + nanodiamond aqueous dispersion were charged into a first plastic bottle, and 10 mL of a ζ - nanodiamond aqueous dispersion were charged into a second plastic bottle.

The Si substrate obtained in Preparation Example 1 was immersed in the ζ + nanodiamond aqueous dispersion at room temperature, and the Si substrate was taken out after about 1 minute. Thereafter, the substrate surface was sufficiently washed with pure water, and the water remaining on the surface was blown off by air blow.

Subsequently, the treated Si substrate was immersed in the ζ - nanodiamond aqueous dispersion at room temperature, and the Si substrate was taken out after about 1 minute. Thereafter, the substrate surface was sufficiently washed with pure water, and the water remaining on the surface was blown off by air blow.

The immersing in the ζ + nanodiamond aqueous dispersion and drying, and immersing in the ζ - nanodiamond aqueous dispersion and drying were further repeated four times to form ten diamond particle layers. In this way, Structure 1 [(ND particle layer)₁₀/Si] was obtained. The coating film portion of Structure 1 had an ocher color. The coating film thickness was from 20 to 30 nm, and the root mean square roughness (Rms) of the coating film surface was 25 nm.

### Example 2

Structure 2 [(ND particle layer)₂₀/Si] was obtained in a manner similar to that in Example 1, except that the immersing in the ζ + nanodiamond aqueous dispersion and drying, and immersing in the ζ - nanodiamond aqueous dispersion and drying were repeated 10 times to form 20 diamond particle layers. The coating film portion of Structure 2 had a deep blue color. The coating film thickness was from 40 to 60 nm, and the root mean square roughness (Rms) of the coating film surface was 36 nm.

### Example 3

A copper substrate (oxygen-free copper plate C1020) was immersed in a ζ + nanodiamond aqueous dispersion at room temperature, and the copper substrate was taken out after about 1 minute. Thereafter, the substrate surface was sufficiently washed with pure water, and the water remaining on the surface was blown off by air blow. In this way, a (ND particle layer)₁/Cu laminate in which the zeta potential of the outermost diamond particle layer was positive was obtained. The coating film portion of the laminate had a copper color. The coating film thickness was from 8 to 10 nm, and the root mean square roughness (Rms) of the coating film surface was 12 nm.

The obtained (ND particle layer)₁/Cu laminate was immersed in the ζ - nanodiamond aqueous dispersion at room temperature, and the laminate was taken out after about 1 minute. Thereafter, the laminate surface was sufficiently washed with pure water, and the water remaining on the surface was blown off by air blow.

The immersing in the ζ + nanodiamond aqueous dispersion and drying, and immersing in the ζ - nanodiamond aqueous dispersion and drying were further repeated twice to form six diamond particle layers. In this way, Structure 3 [(ND particle layer)₆/Cu] in which the zeta potential of the outermost diamond particle layer was negative was obtained. The coating film portion of Structure 3 had an amber color. The coating film thickness was from 15 to 25 nm, and the root mean square roughness (Rms) of the coating film surface was 16 nm.

### Example 4

This example was performed in a manner similar to that of Example 3, except that 15 diamond particle layers were formed by repeating the immersing in the ζ + nanodiamond aqueous dispersion and drying, and immersing in the ζ - nanodiamond aqueous dispersion and drying. In this way, Structure 4 [(ND particle layer)₁₅/Cu] in which the zeta potential of the outermost diamond particle layer was positive was obtained. The coating film portion of the above-mentioned Structure 4 was pink gold. The coating film thickness was 30 to 50 nm, and the root mean square roughness (Rms) of the coating film surface was 30 nm.

### Example 5

This example was performed in a manner similar to Example 3, except that 30 diamond particle layers were formed by repeating the immersing in the ζ + nanodiamond aqueous dispersion and drying, and immersing in the ζ - nanodiamond aqueous dispersion and drying. In this way, Structure 5 [(ND particle layer)₃₀/Cu] in which the zeta potential of the outermost diamond particle layer was negative was obtained. The coating film portion of Structure 5 had a gold color. The coating film thickness was from 70 to 100 nm, and the root mean square roughness (Rms) of the coating film surface was 46 nm.

### Comparative Example 1

In a "ζ + nanodiamond aqueous dispersion" of DINNOVARE available from Daicel Corporation (d50 of diamond particles: 3.5 nm, concentration of diamond particles: 1 wt%, pH: 5, zeta potential: +50 mV), which is an aqueous dispersion of ND particles having a positive zeta potential, a voltage was applied between a copper substrate and a counter electrode to attempt adsorption of diamond particles on the copper substrate by electrophoresis.

However, only a low voltage could be applied because electrolysis of water occurred violently at about 2 V or higher. Thus, the hydrophilic repulsion force between the substrate and the diamond particles could not be overcome, and the diamond particles could not be adsorbed in multiple layers.

### Comparative Example 2

10 g of polyvinyl alcohol were added to 100 mL of a "ζ + nanodiamond aqueous dispersion" of DINNOVARE available from Daicel Corporation (d50 of diamond particles: 3.5 nm, concentration of diamond particles: 1 wt%, pH: 5, zeta potential: +50 mV), which is an aqueous dispersion of ND particles having a positive zeta potential, and the polyvinyl alcohol was completely dissolved under stirring at ambient temperature to obtain a ζ + nanodiamond paste (viscosity at 25°C and rotation speed D of 20/s: more than 100 mPa·s.

10 mL of the ζ + nanodiamond paste were added dropwise onto a surface of the Si substrate obtained in Preparation Example 1, spin-coated at a rotation speed of 1000 rpm, and dried.

In this way, a coating film (thickness: 100 nm) containing ND particles was formed on the Si substrate. The surface of the resulting coating film had a root mean square roughness (Rms) of 300 nm or more, was very rough, and lacked uniformity.

As a summary of the above, configurations and variations of the present disclosure are described below.
[1] A structure including:
   a substrate; and
   a coating film including a first layer of diamond particles fixed on a surface of the substrate, and one or more other layers of diamond particles disposed on the first layer of diamond particles, the first and other layers of diamond particles adjacent to each other in a height direction being in close contact with each other.
[2] The structure according to [1], wherein the coating film has a thickness from 5 nm to 10 µm.
[3] The structure according to [1] or [2], wherein the coating film surface has a root mean square roughness (Rms) of 200 nm or less.
[4] The structure according to any one of [1] to [3], wherein the first and other layers of diamond particles adjacent to each other in the height direction are in close contact with each other by Coulomb force.
[5] A method for producing a structure, the method including: performing the following Step 1; and then performing the following Step 2 at least once to obtain the structure according to any one of [1] to [4]:
   Step 1: fixing, on a substrate having a positive or negative charge, a layer of diamond particles having a negative or positive charge that is opposite to the charge of the substrate; and
   Step 2: stacking, on the previously fixed or stacked layer of diamond particles, another layer of diamond particles having a positive or negative charge that is opposite to the charge of the diamond particles in the previously fixed or stacked layer.
[6] The method for producing a structure according to [5], wherein the diamond particles having a positive or negative charge for each layer have an absolute value of a zeta potential in water of 20 mV or more.
[7] The method for producing a structure according to [5] or [6], wherein Step 1 is applying, onto a substrate having a positive or negative charge, an aqueous dispersion of diamond particles having a positive or negative charge that is opposite to the charge of the substrate, and drying the aqueous dispersion to fix the diamond particles having a charge opposite to the charge of the substrate.
[8] The method for producing a structure according to any one of [5] to [7], wherein Step 2 is applying, onto the previously fixed or stacked layer of diamond particles, an aqueous dispersion of diamond particles having a positive or negative charge that is opposite to the charge of the diamond particles in the previously fixed or stacked layer, and drying the aqueous dispersion to stack a layer of the diamond particles having a charge opposite to the charge of the diamond particles in the previously fixed stacked layer.
[9] The method for producing a structure according to any one of [5] to [8], wherein in Step 2, a sum of an absolute value of the zeta potential of the diamond particles in the previously fixed or stacked layer and an absolute value of the zeta potential of the diamond particles having a charge opposite to the charge of the diamond particles in the previously fixed or stacked layer is 40 mV or more.
[10] The method for producing a structure according to any one of [5] to [9], wherein the number of times of Step 2 is 5 or more times.
[11] A method for producing a structure, the method including performing the following Step 1, and then performing the following Step 2 one to fifty times, to obtain a structure including a substrate, and a coating film including a first layer of diamond particles fixed on a surface of the substrate, and one to fifty layers of diamond particles stacked on the first layer of diamond particles, wherein the first and other layers of diamond particles adjacent to each other in a height direction are in close contact with each other, and the coating film exhibits a metal color that varies depending on the number of times of Step 2:
   Step 1: fixing, on a substrate having a positive or negative charge, a layer of diamond particles having a negative or positive charge that is opposite to the charge of the substrate; and
   Step 2: stacking, on the previously fixed or stacked layer of diamond particles, another layer of diamond particles having a positive or negative charge that is opposite to the charge of the diamond particles in the previously fixed or stacked layer.

### Industrial Applicability

The structure of the present disclosure has a nanodiamond coating film with excellent surface smoothness. The coating film exhibits a metal color with a color tone that varies depending on the number of the diamond particle layers. Therefore, the structure can be suitably used for decoration.

### Reference Signs List

1 Substrate having a negative charge
2 First diamond particle layer
3 Second diamond particle layer
4 Third diamond particle layer
5 Fourth diamond particle layer
6 Coating film
7 Structure having a configuration in which four diamond particle layers are disposed on a substrate, wherein the outermost diamond particle layer has a negative zeta potential.

## Claims

1. A structure comprising:
a substrate; and
a coating film comprising:
a first layer of diamond particles fixed on a surface of the substrate, and
one or more other layers of diamond particles disposed on the first layer of diamond particles, the first and other layers of diamond particles adjacent to each other in a height direction being in close contact with each other.

2. The structure according to claim 1,
wherein the first and other layers of diamond particles adjacent to each other in the height direction are in close contact with each other by Coulomb force.

3. A method for producing a structure, the method comprising:
performing Step 1; and
then performing Step 2 at least once to produce the structure described in claim 1 or 2:
Step 1: fixing, on a substrate having a positive or negative charge, a layer of diamond particles having a positive or negative charge that is opposite to the charge of the substrate; and
Step 2: stacking, on the previously fixed or stacked layer of diamond particles, another layer of diamond particles having a positive or negative charge that is opposite to the charge of the diamond particles in the previously fixed or stacked layer.

4. The method for producing a structure according to claim 3, wherein the diamond particles having a positive or negative charge for each layer have an absolute value of a zeta potential in water of 20 mV or more.
